# EUROPÄISCHE PATENTANMELDUNG

(11) **EP 2 886 328 A1**
(43) Veröffentlichungstag der Anmeldung: **24.06.2015**
(21) Anmeldenummer: 14004253.2
(22) Anmeldetag: 17.12.2014
(51) Int. Cl.: B32B 7/00, B32B 7/02, B32B 7/12, B32B 27/00, B32B 27/06, B32B 27/08, B32B 27/32, B32B 27/36, B32B 27/40, B32B 29/00, B42D 15/00, D21H 27/26

(54) **Durch Laserdrucker bedruckbares flächiges Verbundmaterial und hieraus hergestelltes Etikett**

(30) Priorität: 19.12.2013 DE 102013021666; 18.03.2014 DE 102014003847
(71) Anmelder: Aluminium Féron GmbH & Co. KG, 52355 Düren (DE)
(72) Erfinder: Höls, Lothar, 52355 Düren (DE); Féron, Berthold, 52372 Kreuzau Bergheim (DE)
(74) Vertreter: Hauck Patentanwaltspartnerschaft mbB

(57) **Zusammenfassung**

Es wird ein durch Laserdrucker bedruckbares flächiges Verbundmaterial mit einer Trägerschicht aus Kunststoff und einer auf dieser angeordneten zur Aufnahme eines Laserdrucks geeigneten Funktionsschicht beschrieben. Das Verbundmaterial zeichnet sich dadurch aus, dass auf der von der Funktionsschicht abgewandten Seite der Trägerschicht eine Papierschicht angeordnet ist. Hierdurch erweist sich das Verbundmaterial als besonders geeignet für einen Einzelblatteinzug bei einem Laserdrucker. Durch die durch die Papierschicht bewirkten stabilisierenden und isolierenden Eigenschaften werden Haftungsprobleme zwischen aufeinanderliegenden Blättern des Verbundmateriales und damit Fehleinzüge vermieden. Ferner wird ein aus einem derartigen Verbundmaterial hergestelltes Etikett beschrieben.

## Beschreibung

Die vorliegende Erfindung betrifft ein durch Laserdrucker bedruckbares flächiges Verbundmaterial mit einer Träger-schicht aus Kunststoff und einer auf dieser angeordneten zur Aufnahme eines Laserdrucks geeigneten Funktionsschicht. Die Erfindung betrifft ferner ein aus einem derartigen Verbundmaterial hergestelltes Etikett.

Derartige durch Laserdrucker bedruckbare flächige Verbundmaterialien sind bekannt. Sie besitzen eine Trägerschicht aus einem geeigneten Kunststoff, beispielsweise Polyester, die beidseitig mit einer zur Aufnahme eines Laserdrucks geeigneten Funktionsschicht versehen ist. Dieses bekannte Verbundmaterial ist daher beidseitig bedruckbar. Bei der zur Aufnahme eines Laserdrucks geeigneten Funktionsschicht handelt es sich üblicherweise um eine entsprechende Lackschicht, die eine hohe Temperaturbeständigkeit und eine gute Haftung an der Trägerschicht aufweist.

Wenn ein derartiges Verbundmaterial, das an beiden Seiten eine Funktionsschicht (Akzeptorbeschichtung) aufweist, durch Einzelblatteinzug mit einem Laserdrucker bedruckt wird, lässt es sich in der Regel nicht verhindern, dass hin und wieder Doppelblatteinzüge auftreten. Dieser Effekt ist in erster Linie darauf zurückzuführen, dass die Blätter aus dem Verbundmaterial insbesondere durch statische Aufladung und/oder durch Adhäsionseffekte (Glasplatteneffekt) aneinander haften, so dass es zu den vorstehend erwähnten Doppeleinzügen bzw. Doppelblatteinzügen kommt.

Ähnliche Effekte treten bei Verbundmaterialien auf, die aus einer nur einseitig mit einer zur Aufnahme eines Laserdrucks geeigneten Funktionsschicht versehenen Trägerschicht bestehen.

Der vorliegenden Erfindung liegt die Aufgabe zugrunde, ein flächiges Verbundmaterial der eingangs geschilderten Art zu schaffen, das mittels Laserdrucker besonders unproblematisch bedruckbar ist. Ferner soll erfindungsgemäß ein aus einem derartigen Verbundmaterial hergestelltes Etikett zur Verfügung gestellt werden.

Diese Aufgabe wird erfindungsgemäß bei einem Verbundmaterial der angegebenen Art dadurch gelöst, dass auf der von der Funktionsschicht abgewandten Seite der Trägerschicht eine Papierschicht angeordnet ist. Ferner wird erfindungsgemäß ein aus einem derartigen Verbundmaterial hergestelltes Etikett bereitgestellt.

Es wurde festgestellt, dass mit dem erfindungsgemäß ausgebildeten Verbundmaterial die vorstehend erwähnten nachteiligen Doppelblatteinzüge bzw. Doppeleinzüge weitgehend vermieden werden können. Durch die auf der von der Funktionsschicht abgewandten Seite der Trägerschicht angeordnete Papierschicht wird das Verbundmaterial stabilisiert und insbesondere isoliert, so dass eine statische Aufladung und/oder Adhäsionseffekte beim Einzelblatteinzug durch einen Laserdrucker weitgehend ausgeschaltet werden können. Es versteht sich, dass das erfindungsgemäß ausgebildete Verbundmaterial nur einseitig bedruckbar ist, was jedoch für die meisten Anwendungsfälle, beispielsweise zur Herstellung und Verwendung als Etikett, vollständig ausreichend ist, da bei diesen Anwendungsfällen nur eine einseitige Bedruckung gewünscht wird.

In einem Stapel von Blättern aus dem erfindungsgemäß ausgebildeten Verbundmaterial liegt jeweils die Papierschicht eines oberen Blattes auf der Funktionsschicht eines darunter befindlichen Blattes. Es liegen daher niemals zwei Funktionsschichten oder eine Funktionsschicht und eine Trägerschicht aufeinander, so dass entsprechende Haftungsprobleme zwischen diesen Schichten durch statische Aufladung oder Adhäsionseffekte vermieden werden können. Die Papierschicht bildet sozusagen eine Isolierschicht zwischen den einzelnen im Stapel angeordneten Blättern. Fehleinzüge bei der Einführung der Blätter in einen Laserdrucker werden daher vermieden.

Bei dem erfindungsgemäß ausgebildeten Verbundmaterial besteht die Trägerschicht vorzugsweise aus Polyester. Weitere bevorzugte, geeignete Kunststoffmaterialien für die Trägerschicht sind Polypropylen oder Polyethylen hoher Dichte. Die entsprechenden Materialien für die Trägerschicht müssen sich durch eine hohe Hitzebeständigkeit auszeichnen, um für eine Bedruckung mit einem Laserdrucker geeignet zu sein. Darüber hinaus muss die Trägerschicht mit der erfindungsgemäß aufgebrachten Papierschicht einen guten und festen Verbund bilden. Dieser Verbund muss qualitativ so gut sein, dass die aus einem derartigen Material hergestellten Endprodukte insbesondere auch für Außenanwendungen geeignet sind, d. h. das Verbundmaterial muss eine entsprechende Witterungsbeständigkeit aufweisen. Bevorzugtes Material ist Polyester.

Was die Stärke der Trägerschicht anbetrifft, so weist diese vorzugsweise eine Stärke von 20 - 200 µm aus, wobei Stärken in einem Bereich um 100 µm bevorzugt werden.

Bei einer bevorzugten Ausführungsform der Erfindung ist die Papierschicht mit Hilfe eines geeigneten Kaschierklebers auf die Trägerschicht aufkaschiert. Als geeignete Kaschierkleber kommen beispielsweise solche auf Basis Polyol/Isocyanat in Frage.

Die erfindungsgemäß aufgebrachte Papierschicht besitzt vorzugsweise eine Stärke von 10 - 30 µm, wobei Werte zwischen 20 und 30 µm besonders bevorzugt werden. Was das Papiergewicht anbetrifft, so hat die Papierschicht vorzugsweise ein Flächengewicht von 5 - 30 g/m².

Es hat sich gezeigt, dass sich mit dem erfindungsgemäß ausgebildeteten Verbundmaterial ein weitgehend fehlerfreier Einzelblatteinzug bei Laserdruckern durchführen lässt. Ferner hat der hergestellte Verbund eine ausreichende Hitzefestigkeit, der eine Bedruckung mit Hilfe eines Laserdruckers ermöglicht. Schließlich zeichnet sich das Verbundmaterial vor und nach dem Bedrucken durch eine stabile, robuste und witterungsbeständige Konsistenz aus. Insbesondere konnte festgestellt werden, dass die auf die Trägerschicht aufgebrachte Papierschicht auch nach längerem Gebrauch des Materiales keine Ablöseerscheinungen zeigt. Insbesondere wurde nach einer Durchfeuchtung des bedruckten oder unbedruckten Verbundmateriales festgestellt, dass ein relativ rascher Trocknungsvorgang stattfindet, der keine Verformung des Verbundmateriales, beispielsweise ein Verziehen des Materiales, Blasenbildung etc., mit sich bringt. Nach dem Trocknen hatte das Verbundmaterial im Wesentlichen wieder seine ursprüngliche ebene Form angenommen.

Die Erfindung betrifft ferner ein aus einem Verbundmaterial der vorstehend beschriebenen Art hergestelltes Etikett. Ein solches Etikett wird durch Bedrucken eine Blattes aus dem Verbundmaterial mit Hilfe eines Laserdruckers hergestellt, wobei das Etikett von der Größe her einem Blatt des Verbundmateriales entsprechen kann oder mehrere Etiketten aus einem derartigen Blatt hergestellt werden können. Natürlich können auch weitere Arbeitsschritte durchgeführt werden, um ein derartiges Etikett herzustellen, die an dieser Stelle nicht im Einzelnen aufgeführt sind.

Das hergestellte Etikett weist auf der einen Seite der Trägerschicht die mit einem Laserdruck versehene Funktionsschicht und auf der anderen Seite der Trägerschicht die erfindungsgemäß aufgebrachte Papierschicht auf.

Die Erfindung wird nachfolgend anhand von Ausführungsbeispielen in Verbindung mit der Zeichnung im einzelnen beschieben. Es zeigen:
- Figur 1: einen Schnitt durch ein herkömmliches durch Laserdrucker bedruckbares flächiges Verbundmaterial; und
- Figur 2: einen Schnitt durch ein erfindungsgemäß ausgebildetes durch Laserdrucker bedruckbares flächiges Verbundmaterial.

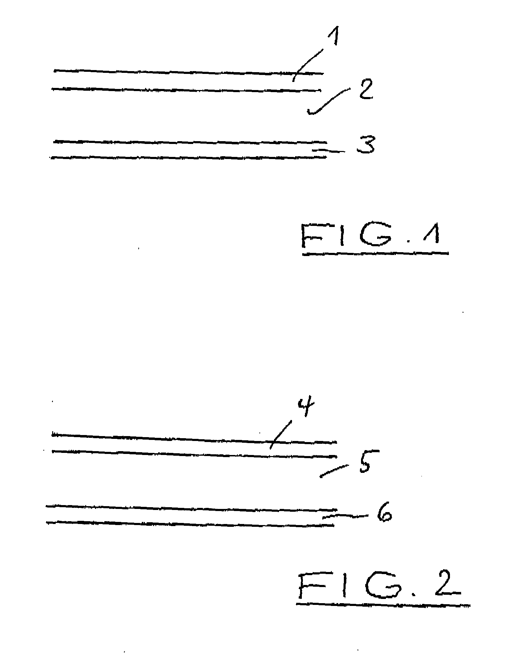

Das in Figur 1 schematisch im Schnitt dargestellte Verbundmaterial besitzt ein Trägermaterial 2 aus Polyester, das beidseitig mit einer lasertauglichen Schicht 1, 3 versehen ist, die einen zur Aufnahme eines Laserdrucks geeigneten Lack enthält. Der Aufbau von derartigen lasertauglichen Funktionsschichten ist bekannt und muss daher an dieser Stelle nicht mehr im einzelnen erläutert werden. Dieses herkömmliche Verbundmaterial ist beidseitig mit einem Laserdrucker bedruckbar. Bei einem Einzelblatteinzug des Laserdruckers treten jedoch immer wieder Probleme in Bezug auf Fehleinzüge auf, die durch Haftungsprobleme der aufeinanderliegenden Blätter aus dem Verbundmaterial verursacht werden. Solche Haftungsprobleme können durch statische Aufladung und/oder entsprechende Adhäsionseffekte verursacht werden.

Das in Figur 2 schematisch im Schnitt dargestellte durch Laserdrucker bedruckbare flächige Verbundmaterial besitzt ebenfalls eine Trägerschicht 5 aus Polyester, die aber nur einseitig mit einer lasertauglichen Funktionsschicht 4 zur Aufnahme eines Laserdrucks versehen ist. Auf die andere Seite der Trägerschicht 5 ist eine Papierschicht 6 mit Hilfe eines geeigneten Kaschierklebers aufkaschiert. Diese Papierschicht 6 sorgt für entsprechende Stabilisierungs- und Isolierungseffekte, die die vorstehend erwähnten Haftungsprobleme zwischen den Blättern aus dem Verbundmaterial weitgehend ausschalten, so dass dieses Verbundmaterial besonders geeignet für einen Einzelblatteinzug eines Laserdruckers ist und es nicht zu Doppelblatteinzügen kommt.

Nachfolgend wird ein Ausführungsbeispiel in Bezug auf das in Figur 2 dargestellte Verbundmaterial beschrieben.

Eine Kunststofffolie (Trägerschicht) auf Basis Polyethylenterephthalat wurde mit einer Akzeptorbeschichtung (Funktionsschicht) für in Laserkopierern verwendete Toner beidseitig beschichtet und bei 150°C 2 Stunden getrocknet. Die hierdurch erhaltene Probe 1 diente als Vergleichsbeispiel.

Eine weitere Kunststofffolie auf Basis Polyethylenterephthalat wurde nur einseitig mit der entsprechenden Akzeptorbeschichtung versehen, und die nicht beschichtete Seite der Folie wurde gegen ein Papier von 25 g/m² mittels eines lösemittelhaltigen Kaschierklebers auf Basis Polyol/Isocyanat mit einem Auftragsgewicht nach dem Verdunsten der Lösemittel von ca. 4 g/m² kaschiert. Nach dem Aushärteprozess des Kaschierklebers von 10 Tagen wurde die auf diese Weise erhaltene Probe 2 (erfindungsgemäße Probe) mit der Probe 1 (VergleichSbeispiel) verglichen. Beide Proben wurden in einem Lexmarkdrucker, Typ T650, bedruckt. Dabei wurden von jeder Probe jeweils 3 Druckproben von 100 Blatt auf dem Drucker bedruckt, und die entsprechenden Doppeleinzüge wurden gezählt. Dabei wurde folgendes Ergebnis erhalten:

| Probe | Doppeleinzüge |
|---|---|
| 1 | 12, 8, 13 |
| 2 | 0, 0, 0 |

Im Gegensatz zu dem Verbundmaterial nach dem Stand der Technik (Probe 1), das auf beiden Seiten eine Funktionsschicht aufwies, wurden mit dem erfindungsgemäß ausgebildeten, mit Papier kaschierten Verbundmaterial keine Doppeleinzüge festgestellt.

## Patentansprüche

1. Durch Laserdrucker bedruckbares flächiges Verbundmaterial mit einer Trägerschicht aus Kunststoff und einer auf dieser angeordneten zur Aufnahme eines Laserdrucks geeignetes Funktionsschicht, **dadurch gekennzeichnet, dass** auf der von der Funktionsschicht (4) abgewandten Seite der Trägerschicht (5) eine Papierschicht (6) angeordnet ist.

2. Verbundmaterial nach Anspruch 1, **dadurch gekennzeichnet, dass** die Trägerschicht (5) aus Polyester besteht.

3. Verbundmaterial nach Anspruch 1 oder 2, **dadurch gekennzeichnet, dass** die Trägerschicht (5) eine Stärke von 20 - 200 µm besitzt.

4. Verbundmaterial nach einem der vorangehenden Ansprüche, **dadurch gekennzeichnet, dass** die Papierschicht (6) mit Hilfe eines geeigneten Kaschierklebers auf die Trägerschicht (5) aufkaschiert ist.

5. Verbundmaterial nach Anspruch 4, **dadurch gekennzeichnet, dass** ein Kaschierkleber auf Basis Polyol/Isocyanat Verwendung findet.

6. Verbundmaterial nach einem der vorangehenden Ansprüche, **dadurch gekennzeichnet, dass** die Papierschicht (6) eine Stärke von 10 - 30 µm besitzt.

7. Verbundmaterial nach einem der vorangehenden Ansprüche, **dadurch gekennzeichnet, dass** die Papierschicht (6) ein Flächengewicht von 5 - 30 g/m² besitzt.

8. Etikett, **dadurch gekennzeichnet, dass** es aus einem Verbundmaterial der vorangehenden Ansprüche hergestellt ist.

9. Etikett nach Anspruch 8, **dadurch gekennzeichnet, dass** es mit einem Laserdrucker bedruckt ist.
